Europäisches Patentamt

**European Patent Office** (11) Numéro de publication: **0 074 868**

Office européen des brevets **B1**

(19)

(12) # FASCICULE DE BREVET EUROPEEN

(45) Date de publication du fascicule du brevet:
10.07.85

(21) Numéro de dépôt: **82401521.8**

(22) Date de dépôt: **11.08.82**

(51) Int. Cl.⁴: **G 05 B 13/02**, G 05 D 23/19, G 05 B 17/02

(54) **Procédé d'identification du modèle d'une enceinte thermique et application à la régulation d'une enceinte thermique.**

(30) Priorité: **11.09.81 FR 8117533**

(43) Date de publication de la demande:
**23.03.83 Bulletin 83/12**

(45) Mention de la délivrance du brevet:
**10.07.85 Bulletin 85/28**

(84) Etats contractants désignés:
**AT BE CH DE GB IT LI LU NL SE**

(56) Documents cités:
**MESURES-REGULATION-AUTOMATISME, vol. 42, no. 6, juin 1977, pages 65-73, Paris, Fr. G. ZWARG: "Regulation d'un processus thermique"**
**WISSENSCHAFTLICHE BERICHTE AEG-TELEFUNKEN, vol. 46, nos. 3,4, 1973, pages 61-68, Berlin, DE. H.G. SCHEURER: "Einige experimentelle System-Identifizierungsverfahren und ihre Anwendungsmöglichkeiten im Prozessrechner-Einsatz"**
**MESURES-REGULATION-AUTOMATISME, vol. 39, no. 12, décembre 1974, pages 47-53, Paris, Fr. A. SABATIER: "Régulation numérique directe d'un processus thermique à forte inertie"**

(73) Titulaire: **LA TELEMECANIQUE ELECTRIQUE, 33 bis, avenue du Maréchal Joffre, F-92000 Nanterre (FR)**

(72) Inventeur: **Testud, Jean-Louis, 4/6 Rue Charles-Fourier, F-75013 Paris (FR)**
Inventeur: **Aucel, Jean-Claude, 11, rue Sidi Brahim Les Jardins du Soleil, F-06130 Grasse (FR)**

(74) Mandataire: **Marquer, Francis, CABINET MOUTARD 35, avenue Victor Hugo Résidence Champfleury, F-78180 Voisins le Bretonneux (FR)**

**0 074 868**

## Description

La présente invention concerne un procédé d'identification du modèle d'une enceinte à réguler et son application à la régulation d'une enceinte thermique.

Il est connu dans les régulations d'utiliser des régulateurs analogiques notamment proportionnel intégral dérivé P. I. D. qui ont l'inconvénient de devoir être règlés chaque fois que l'on change de point de fonctionnement. Ces règlages sont de plus en général longs, peu précis et doivent faire appel à des spécialistes.

Il est également connu par la demande de brevet FR-A-2 372 466 déposée au nom d'Alsthom Atlantique de réaliser une régulation utilisant un modèle de représentation du processus à commander, mais ici ce modèle est réalisé analogiquement et ne peut être qu'une approximation de la représentation du processus. De plus ce modèle est utilisé avec un régulateur P. I. analogique.

Par ailleurs, le document »AEG-Telefunken« 46 (1973) 3/4, pages 61—67, décrit un procédé d'identification du modèle mathématique du fonctionnement en boucle ouverte d'un processus industriel pour toute une gamme de paramètres de fonctionnement selon lequel on élabore un signal d'identification par exemple constitué d'une multiplicité de créneaux quasi-aléatoires de contenu énergétique variable en rapport avec le temps de réponse du processus et on mesure par échantillonnage, on calcule et on met en mémoire, des réponses impulsionnelles du processus au signal d'identification, puis on calcule le modèle à partir de ces réponses.

Toutefois, il s'avère que dans ce procédé, la variation de largeur des créneaux ne permet une exploration fréquencielle du processus que pour un seul point de fonctionnement de celui-ci et, en conséquence, de ne recréer une réponse impulsionnelle que pour un seul point de fonctionnement.

Un premier but de l'invention est donc de réaliser un procédé d'identification d'un modèle numérique de preprésentation d'une enceinte thermique, qui soit valable quel que soit le point de fonctionnement de l'enceinte.

Un deuxième but de l'invention est la réalisation d'un régulateur numérique utilisant le modèle de représentation de l'enceinte et admettant des désadaptations du modèle par rapport à la réaction de l'enceinte aux actions appliquées par le régulateur.

Un troisième but de l'invention est d'automatiser l'identification et le réglage optimal du régulateur.

Suivant l'invention, le procédé d'identification du modèle comprend les étapes suivantes:

— détermination approximative du temps de réponse de l'enceinte par mesure et enregistrement de la réponse en température de l'enceinte à un échelon de puissance;
— élaboration d'un signal d'identification constitué d'une multiplicité de créneaux quasi-aléatoires, de hauteur variable et dont la largeur, également variable, est comprise entre une limite inférieure et une limite supérieure en rapport avec le temps de réponse de l'enceinte;
— mesure par échantillonnage, calcul et mise en mémoire de la réponse impulsionnelle de l'enceinte au signal d'identification pour chaque créneau;
— calcul du modèle de représentation de l'enceinte à partir des réponses impulsionnelles mémorisées.

Ce procédé est caractérisé en ce que la hauteur des créneaux du signal d'identification est également variable, et en ce que le calcul du modèle de représentation de l'enceinte est effectué par paramètrage, à partir des enregistrements suivants:

— l'enregistrement dans une première série de mémoires d'une première multiplicité de premières valeurs déterminées après échantillonnage à des intervalles de temps constants, lesdites valeurs étant représentatives de la réponse impulsionnelle de l'enceinte en fonction du temps, lesdites valeurs étant rangées à des adresses correspondant au rang de l'échantillonnage,
— l'enregistrement dans une deuxième série de mémoires d'une deuxième multiplicité de valeurs représentatives de la variation du gain des réponses impulsionnelles en fonction de la température de fonctionnement, lesdites deuxièmes valeurs étant rangées à des adresses correspondant aux différentes températures de fonctionnement,
— l'enregistrement dans une troisième série de mémoires d'une troisième multiplicité de valeurs représentatives de la variation de la période d'échantillonnage en fonction des différentes températures de fonctionnement, à des adresses correspondant aux températures.

L'invention concerne également un procédé de régulation d'une enceinte thermique comprenant la mesure de la température à réguler, l'élaboration, à partir des valeurs de température et du point de consigne, d'un signal d'action à imposer à l'enceinte, et une commande agissant sur la température de l'enceinte en réponse au signal d'action, l'élaboration du signal de commande étant effectuée à l'aide d'un premier ensemble d'algorithmes qui tient compte de la mesure de la sortie de l'enceinte, calcule le comportement futur souhaité en fonction du temps de réponse souhaité du système bouclé, estime, grâce à un modèle mathématique l'évolution future de la sortie et ajuste les commandes futures, applique la première commande et compare la mesure avec les valeurs estimées pour appliquer la commande sui-

2

vante en cas d'adaptation, ou effectue un nouveau calcul, une nouvelle estimation et un nouvel ajustement avant d'appliquer la nouvelle première commande, ledit modèle mathématique étant au préalable obtenu au moyen d'un processus d'identification comprenant les étapes suivantes:

— la détermination approximative du temps de réponse de l'enceinte par mesure et enregistrement de la réponse en température de l'enceinte à un échelon de puissance,
— l'élaboration d'un signal d'identification constitué d'une multiplicité de créneaux quasi-aléatoires, de largeur variable, comprise entre une limite inférieure et une limite supérieure en réponse avec le temps de réponse de l'enceinte,
— la mesure, par échantillonnage, calcul et mise en mémoire des réponses impulsionnelles de l'enceinte, au signal d'identification pour chaque créneau,
— le calcul du modèle de représentation de l'enceinte à partir des réponses impulsionnelles mémorisées.

Ce procédé est caractérisé en ce que la hauteur des créneaux du signal d'identification est également variable, et en ce que le calcul du modèle de représentation de l'enceinte est effectué par paramètrage, à partir des enregistrements suivants:

— l'enregistrement, dans une première série de mémoires, d'une première multiplicité de premières valeurs déterminées après échantillonnage à des intervalles de temps constants, lesdites valeurs étant représentatives de la réponse impulsionnelle de l'enceinte en fonction du temps, lesdites valeurs étant rangées à des adresses correspondant au rang de l'échantillonnage,
— l'enregistrement, dans une deuxième série de mémoires, d'une deuxième multiplicité de valeurs représentatives de la variation du gain des réponses impulsionnelle en fonction de la température de fonctionnement, lesdites deuxièmes valeurs étant rangées à des adresses correspondant aux différentes températures de fonctionnement,
— l'enregistrement, dans une troisième série de mémoires, d'une troisième multiplicité de valeurs représentatives de la variation de la période d'échantillonnage en fonction des différentes températures de fonctionnement, à des adresses correspondant aux températures.

L'invention sera mieux comprise à la lecture de la description faite en référence aux dessins annexés dans lesquels:

La figure 1 représente une régulation constituant l'état de la technique.
La figure 2 est une vue schématique du dispositif de mise en oeuvre de l'invention.
La figure 3 est un graphique des courbes représentatives des réponses impulsionnelles permettant de constituer le modèle.
Les figures 4, 5, 6 représentent les courbes représentatives du modèle de représentation de l'enceinte.
La figure 7 est une variante de réalisation de la régulation.

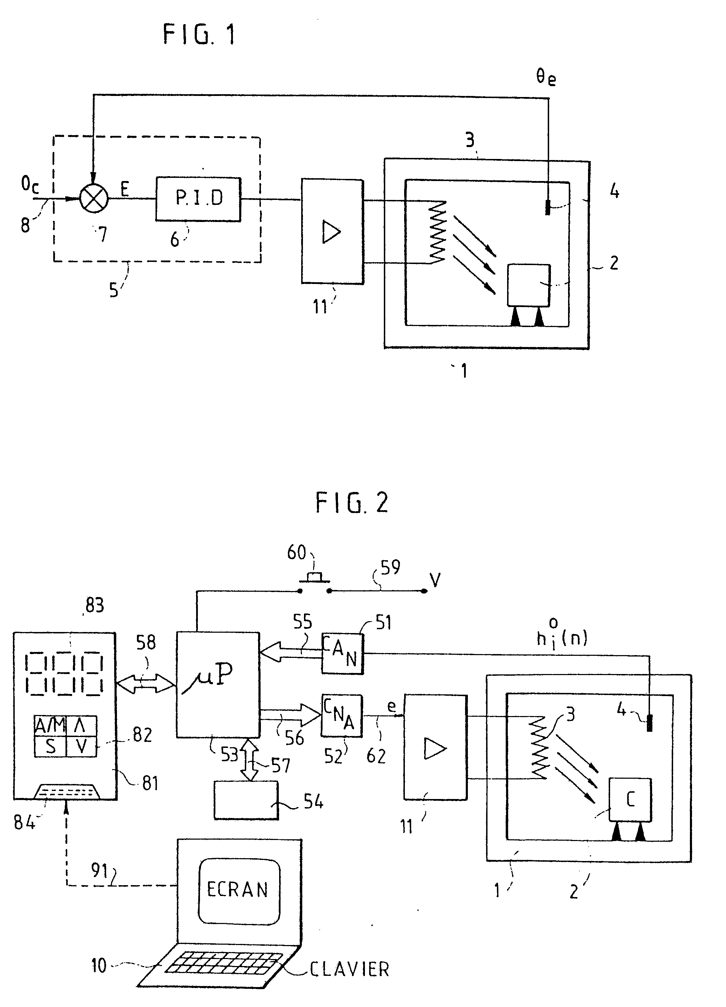

La figure 1 représente un procédé de régulation d'une enceinte thermique utilisant, de façon connue en soi, un élément de mesure 4 constitué par un thermocouple ou capteur de température, un élément de calcul 5 élaborant, à partir des valeurs de la température d'enceinte $\Theta_e$ et du point de consigne $\Theta_c$, le signal de commande W à appliquer à un organe de commande 11 agissant sur le processus à réguler. L'enceinte thermique comporte une enceinte calorifugée 1, un actionneur ou une résistance électrique 3 et une charge 2 constituée par les objets que l'on veut chauffer. Dans ce type de réalisation classique, l'élément de calcul 5 comprenait un comparateur 7 qui élaborait un signal d'écart entre la valeur de consigne et la valeur mesurée et un régulateur autonome P.I.D. à action proportionnelle intégrale et dérivée, qui élaborait un signal de commande analogique W à partir du signal d'écart.

Toutefois, ces régulateurs, qui fonctionnent correctement pour un point de fonctionnement donné, nécessitent des réglages fastidieux et délicats chaque fois que l'on veut changer de point de fonctionnement.

De plus, lorsque l'on applique ce type de régulateur à une enceinte dont les caractéristiques évoluent dans le temps, non seulement en fonction de son entrée, mais aussi en fonction d'autres facteurs, tels que par exemple, pour un four, les fuites thermiques, la puissance rayonnée par les résistances, les coefficients d'absorption des parois, il est nécessaire d'effectuer des réglages fréquents des paramètres. Ces inconvénients et bien d'autres sont évités par le dispositif de l'invention, comme le montrera la suite de la description.

Le dispositif de régulation qui va être décrit à titre d'exemple en se référant à la figure 2 sert à réguler la température d'un four ou enceinte thermique. Ce dispositif comprend comme précédemment une enceinte 1, une résistance électrique de chauffage branchée à un dispositif de commande 11 fournissant la puissance, ce dispositif étant par exemple un gradateur, une charge 2 et un thermocouple 4 pour mesurer la température de l'enceinte. La sortie de ce thermocouple est reliée à l'entrée d'un convertisseur analogique-numérique 51 qui est relié à une ligne bus d'entrée 55 d'un microprocesseur 53. Le microprocesseur est relié par une première ligne bus d'entrée-sortie 57 à des mémoires externes 54 et, par une deuxième ligne bus 58, à une face avant 81 comportant un clavier de touches 82, un élément d'affichage 83 et une prise de dialogue 84 qui peut être reliée, par un câble de liaison entrée-sortie 91 représenté en pointillé, à une console 10. Le rôle de la liaison 91 avec la console sera expliqué par la suite. Le microprocesseur ou microsystème est relié, par une ligne bus de sortie 56, à l'entrée d'un convertisseur numérique-analogique 52 dont la sortie est branchée, par la ligne 62, à l'entrée du gradateur 11. Le microprocesseur peut également comprendre au moins une entrée par tout ou rien 59 reliée, par un contact 60 servant à signaler, par exemple, l'ouverture de la porte du four, à une source de tension V.

Le dispositif est utilisé en deux phases, une première dite d'identification et une deuxième dite de commande.

Le dispositif est utilisé dans la deuxième phase dite de commande, sans la liaison 91, avec la console 10. Au début de cette phase, les mémoires 54 sont chargées par un modèle interne de représentation de l'enceinte, constitué par un premier ensemble de valeurs stockées dans un premier bloc de mémoires, cet ensemble de valeurs étant les coefficients représentatifs de la courbe de réponse impulsionnelle de l'enceinte, pris à des intervalles de temps donnés qui définissent les adresses de stockage de ces premières valeurs; un deuxième ensemble de valeurs représentatives de la courbe de variation du gain G des réponses impulsionnelles, pour différentes températures de fonctionnement $\Theta_j$ qui définissent les adresses de ces deuxièmes valeurs; un troisième ensemble de valeurs représentatives de la courbe de variation des périodes d'échantillonnages T permettant le même nombre de points de définition que pour les premières valeurs, pour différentes températures $\Theta_j$ qui définissent les adresses de ces troisièmes valeurs. Ces deux dernières courbes permettent, par deux homothéties ou par d'autres transformations mathématiques appropriées appliquées à la première courbe de reconstituer par le calcul toutes les courbes de réponse impulsionnelle de l'enceinte en fonction des différentes températures de fonctionnement comprises entre une température de fonctionnement maximum et une température minimum, et d'obtenir ainsi une représentation du modèle mathématique du processus en boucle ouverte.

On utilise ensuite ce modèle en boucle ouverte stocké dans les mémoires 54, avec un modèle de référence donnant le comportement souhaité du système bouclé, pour déterminer, par le calcul, la succession de signaux de commande à appliquer au gradateur, en fonction: du temps de réponse souhaité pour le système bouclé, de la température de consigne à atteindre et de la température de départ, qui est celle mesurée dans l'enceinte par le thermocouple 4 ou un capteur de température. Le microprocesseur ou microsystème contient un programme qui élabore, en fonction des contraintes que l'on veut imposer au système (temps de réponse bouclé, gradient de température à ne pas dépasser, etc.) une stratégie de commande qu'il va appliquer au modèle en boucle ouverte et à l'enceinte. Du modèle en boucle ouverte, il recevra la température mesurée. La comparaison de ces deux températures permet au microprocesseur de modifier si besoin sa stratégie de commande dans le cas d'une désadaptation.

Les algorithmes utilisés pour élaborer la stratégie de commande sont bien connus des automaticiens et seront explicités plus loin.

Les signaux de commande W sont envoyés sous forme numérique par le bus 56 au convertisseur numérique-analogique qui transmet un signal de commande analogique à l'organe de commande 11. La température de l'enceinte évoluant en réponse au signal de commande est mesurée par un thermocouple et transmise sous forme analogique à un convertisseur analogique-numérique qui transmet au bus d'entrée 55 un signal numérique. Les touches 82 et l'affichage 83 permettent en entrée de faire prendre en compte par le microprocesseur la température de consigne à atteindre et le temps de réponse souhaité pour le système bouclé et les contraintes à imposer à l'enceinte qui peuvent être de niveau (valeur à ne pas dépasser), ou de gradient (contrainte sur les incréments). L'affichage permet, entre autre, de visualiser en sortie la température du four.

Pour pouvoir utiliser le dispositif dans la phase dite de commande il est nécessaire de procéder, lors de la mise en route du régulateur, à une première phase dite d'identification. Cette phase d'identification consiste à élaborer le modèle mathématique de représentation de l'enceinte pour un processus en boucle ouverte.

On choisit de représenter le modèle par la réponse impulsionnelle de l'enceinte. Pour obtenir cette réponse impulsionnelle, on procède en quatre étapes.

La première étape consiste en la détermination approximative du temps de réponse de l'enceinte. Pour cela, la console envoie un signal en forme d'échelon à l'enceinte et enregistre et stocke en mémoire la courbe de réponse de l'enceinte aux stimulis envoyés par la console. Puis la console calcule, par exemple par la méthode de Naslin ou la méthode de la pente à l'origine, le temps de réponse du processus en boucle ouverte et passe à la deuxième étape.

Dans la deuxième étape, la console élabore un protocole d'identification. Ce protocole consiste en une succession de créneaux de largeur et de hauteurs variables. Les largeurs retenues sont aléatoires, mais comprises entre une largeur maximale et une largeur minimale que l'homme du métier sait déterminer en fonction du temps de réponse de l'enceinte, déterminé au cours de la première étape, ceci afin d'éviter d'envoyer à l'enceinte des signaux d'excitation provoquant une réponse non significative pour la modélisation de l'enceinte. Les hauteurs varient également de façon aléatoire, mais en tenant compte de la température maximum que le four peut supporter. La console détermine également la période d'échantillonnage T du signal de réponse en fonction du temps de réponse ($\tau$) de l'enceinte et du nombre N de Points souhaités pour la réponse impulsionnelle. La période d'échantillonnage T est calculée de façon que $N \times T > r$, tout en respectant le théorème de Shannon pour le choix de T.

Une fois le protocole élaboré, la console passe à la troisième étape qui permet la constitution du modèle. Pour cela, la console applique à l'enceinte le protocole d'identification qui consiste en une succession de créneaux. Par échantillonnage, sont enregistrées en mémoire les réponses au protocole et les calculs sont effectués pour déterminer la réponse impulsionnelle de l'enceinte.

Pour effectuer ces calculs, la console utilise un algorithme d'identification tel que:

$$h_i^M(n+1) = h_i^M(n) - \frac{\lambda \varepsilon(n)\, e(n-i)}{E_{(n)}^T\, E_{(n)}}$$

avec

$$\varepsilon_{(n)} \quad = SM_{(n)} - SO_{(n)} \quad = \sum_{i=1}^{N} [h_i^M(n) - h_i^0(n)]\, e_{n-i}$$

$h_i^0(n) = i^{ème}$ coefficient de la réponse impulsionnelle de l'enceinte,
SM = sortie modèle,
SO = sortie objet,
$\quad 0 < \lambda < 2,$

$E_n^T \quad = [e_{n-1}, e_{n-2}, \ldots e_{n-N}]$ et

$$E_n \quad = \begin{bmatrix} e_{n-1} \\ e_{n-2} \\ e_{n-i} \\ e_{n-N} \end{bmatrix}$$

$E_n$ est le vecteur entrée constitué par les valeurs des entrées aux instants d'échantillonnage $n-1$, $n-2, \ldots n-N$.

$\varepsilon_{(n)}$ est égal à la différence entre la sortie du modèle à l'instant d'échantillonnage n et la sortie de l'enceinte dite sortie objet.

$\lambda$ est un coefficient dont le choix permet d'obtenir une convergence plus ou moins rapide et donc d'arriver plus ou moins rapidement à la détermination de la valeur $h_i^M(n)$ représentant la $i^{ème}$ composante du vecteur HM à l'instant d'échantillonnage n. Le vecteur HM est la représentation mathématique du modèle constitué par les coefficients de la réponse impulsionnelle du modèle de l'enceinte, $HM^T = h_i^M \ldots h_i^M \ldots h_N^M$ pour un point de fonctionnement donné.

$E_{(n)}$ est donc donné, à un instant d'échantillonnage, par la console et $SO_{(n)}$ est mesurée à l'instant d'échantillonnage n. Connaissant par les calculs précédents, $h_i^M(n)$, le dispositif en déduit $\varepsilon(n)$ et $h_i^M(n+1)$ et il détermine ainsi de proche en proche, par une succession de mesures effectuées par échantillonnage sur le créneau appliqué à l'entrée et sur le signal récupéré en sortie de l'enceinte et par une succession de calculs, les composantes définissant la réponse impulsionnelle de l'enceinte.

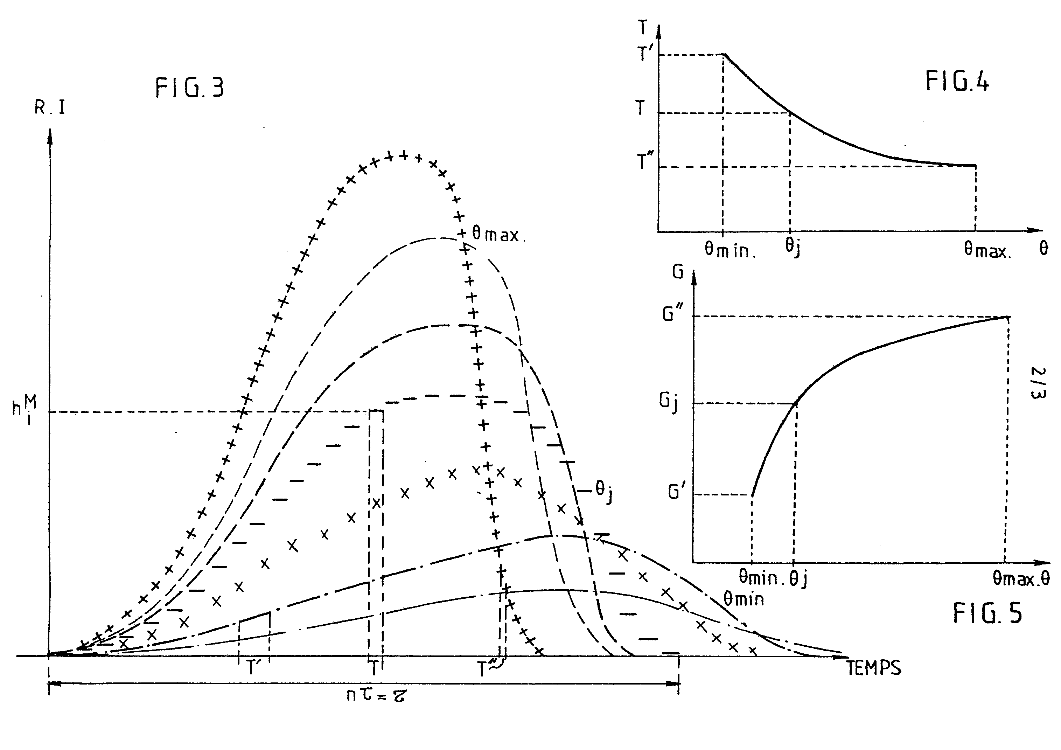

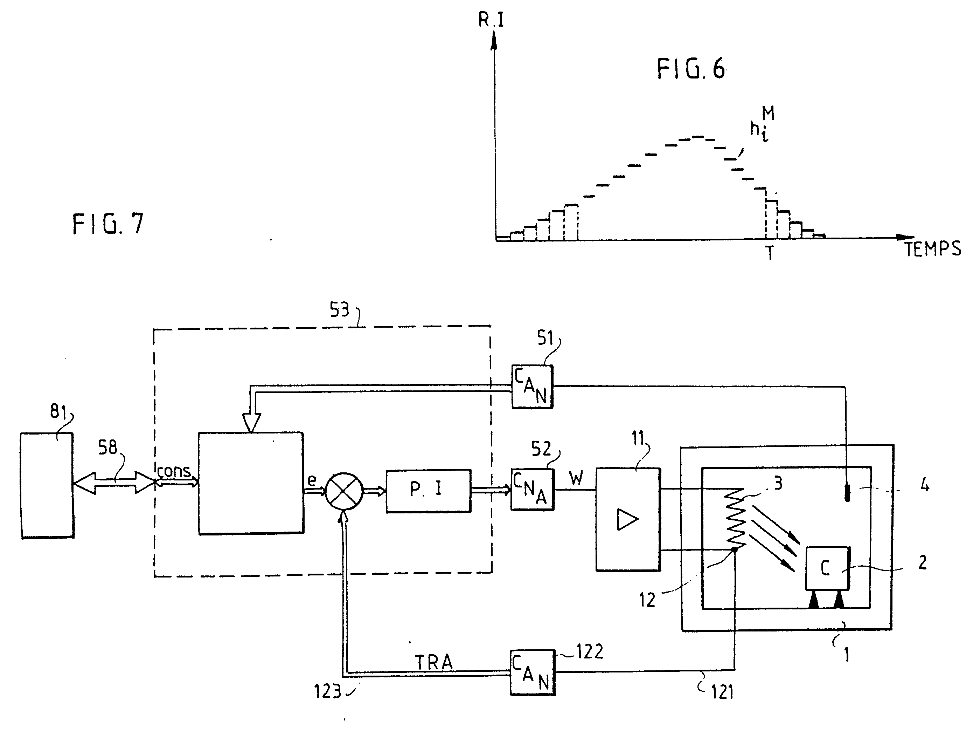

Le dispositif opère de la même manière pour une succession de créneaux dont la valeur moyenne se situe à différents niveaux correspondant à différents points de fonctionnement. On obtient ainsi une famille de vecteurs représentant une famille de courbes telles que celles représentées à la figure 3. Cette famille de courbes ($HM_1 \ldots HM_u$) représentant les réponses impulsionnelles pour différents points de fonctionnement, sera paramétrée en retenant, comme représenté à la figure 6, une courbe de réponse impulsionnelle $HM_j$, donnée à une température de fonctionnement $\Theta_j$, pour un certain nombre de points d'échantillonnage, par les valeurs des coefficients $h_{ij}^M$ calculés pour une période d'échantillonnage donnée; ensuite, est déterminé par calcul le gain de la réponse $HM_j$ et des autres réponses impulsionnelles, de façon à avoir les variations du gain en fonction de la température de fonctionnement, comme représenté à la figure 5. Le gain

$$G_{\Theta j} \quad = \sum_{i=1}^{N} h_{ij}\,.$$

Il est procédé de même pour la période d'échantillonnage, en calculant les valeurs de la période d'échantillonnage T pour que, compte tenu du temps de réponse aux différentes températures de fonctionnement $r_{\Theta j}$, on ait toujours le même nombre de points d'échantillonnage N pour une courbe donnée. On obtient ainsi la variation de la période d'échantillonnage en fonction de la température du point de fonctionnement. La période d'échantillonnage est déterminée par $\frac{r\Theta j}{N}$ qui permettrait de représenter la

**0 074 868**

courbe de la figure 4. Cette succession de coefficients représentant une réponse impulsionnelle échantillonnée pour une température de fonctionnement donnée, les variations du gain en fonction de la température et les variations de la période d'échantillonnage en fonction de la température sont stockées dans la mémoire de la console jusqu'à la fin de l'identification et transférées dans la mémoire 54 du régulateur à la fin de la phase d'identification. Cette représentation paramétrée du modèle permet de reconstituer, par homothétie ou par toute autre transformation mathématique appropriée, les courbes de réponses impulsionnelles aux différentes températures de fonctionnement.

La phase d'identification se termine par une quatrième étape de validation qui consiste à faire générer par la console un autre protocole d'identification différent du premier, à calculer par le modèle les valeurs des sorties et à vérifier que les valeurs mesurées correspondent aux valeurs calculées. A la fin de cette étape, la console transfère le modèle dans le régulateur et le régulateur peut fonctionner seul pour commander l'enceinte sans que la console soit branchée.

Pour la régulation, le microprocesseur utilise donc le modèle interne représentant le système en boucle ouverte, un modèle de référence qui représente le comportement désiré du système bouclé et un algorithme de commande permettant de calculer les commandes à appliquer à l'enceinte, compte tenu des commandes présentes et passées, de façon qu'il y ait coïncidence entre le comportement souhaité calculé et le comportement réel du système.

Dans l'exemple considéré, on a choisi comme représentation du modèle de référence:

$$\left. \begin{array}{l} \text{SMR } (n+1) \ = \ \alpha \text{SO } (n) + (1-\alpha) \text{ CONS et} \\ \text{SMR } (n+h) \ = \ \text{SMR } (n+h-1) + (1-\alpha) \text{ CONS; } h \geq 2 \end{array} \right\} \tag{2}$$

avec

$$\alpha = e^{\dfrac{-T}{\tau_r}}$$

T période d'échantillonnage,
$\tau_r$ temps de réponse souhaité du système,
SMR sortie du modèle de référence,
SO sortie objet mesuré,
CONS consigne.

L'algorithme de commande est l'algorithme dual de l'identification.

La sortie du processus est calculée par la formule faisant intervenir les coefficients $h_i^M$ du modèle interne

$$\text{SMI}_{(n)} = \sum_i e_{n-i} (n) \, h_i^M.$$

Donc, connaissant par la mesure $\text{SO}_{(n)}$ à l'instant d'échantillonnage n, le dispositon calcule les sorties du modèle de référence souhaitées aux instants $n + 1, n + 2, \ldots n + h$, par les formules (2) dans lesquelles on connaît la sortie objet à l'instant n et la consigne à atteindre CONS.

Le dispositif estime l'évolution future de la sortie en calculant:

$$\text{SMIF}_{(n+h)} = \text{HM}^T \cdot \dot{E_h}$$

$\dot{E_h}$ est le vecteur commande composé de h commandes futures et $N - h$ commandes passées.

Connaissant la sortie du modèle interne futur, le dispositif calcule $\varepsilon_{(n+h)} = \text{SMIF}_{(n+h)} - \text{SMR}_{(n+h)}$. Les commandes futures sont ajustées de façon itérative, chaque itération se décomposant en h ajustements pour satisfaire les h points de coïncidence souhaités, en commençant par le plus éloigné dans le futur. Cet ajustement se fait, pour chacune des composantes du vecteur commande futur, en chacun des points de coïncidence, suivant l'algorithme

$$\dot{e_j} = e_i - \dfrac{\lambda \, \varepsilon \, (n+h-1) \, h_j^M}{\text{HM}^T \cdot \text{HM}}$$

avec

j variant de 1 à $h - i + 1$,
i variant de 1 à h,
$\lambda$ coefficient de relaxation,
$e_j$ = valeur de la $j^{\text{ème}}$ commande future obtenue soit à l'itération précédente, soit par décalage pour le 1ère itération,
$\dot{e_j}$ prenant la place de $e_j$ à l'itérarion suivante,

6

$h_i^M$ = coefficient du modèle interne,
$\varepsilon(n+h-i+1)$ = écart prédit à instant n au $h-i+1$ point de coïncidence.

La première commande est appliquée à l'enceinte et provoque une sortie SO (+ 1). Connaissant SO (n + 1), le dispositif la compare avec la sortie prédite et réitère le calcul dans le cas d'un écart: en cas de coïncidence, il applique la commande future calculée. Les opérations se sont donc déroulées de la façon suivante: mesure de la sortie du processus, calcul du comportement futur souhaité, estimation de l'évolution future de la sortie, ajustement des commandes futures, application de la première commande, mesure, comparaison avec les valeurs estimées et nouvelle phase de calcul en cas de désadaption; s'il n'y a pas de désadaptation, application des valeurs du premier calcul.

La figure 7 représente une variante d'un dispositif de régulation utilisant le principe, connu en soi, de régulation en cascade des résistances de chauffage et de l'enceinte. Cette variante a pour but d'améliorer les performances thermiques de l'enceinte et de protéger les résistances de chauffage.

Dans la figure 7, on retrouve les éléments du dispositif de la figure 2 avec les mêmes références; mais, dans le microprocesseur 53, on a rajouté une deuxième entrée constituée par le bus d'entrée 123, qui est relié par un convertisseur analogique-numérique 122 à un thermocouple 12 mesurant la température de la résistance de chauffage du four électrique. Cette deuxième entrée est utilisée par le microprocesseur pour calculer les commandes W à appliquer au gradateur en fonction de la commande e, déterminée de la façon décrite ci-dessus et de la température de la résistance de chauffage TRA.

Pour cela, le microprocesseur utilise de préférence l'algorithme suivant, mais tout autre algorithme approprié pourrait être utilisé.

$$W_{(n)} = W_{(n-1)} + GP\,[\varepsilon_{(n)} - \varepsilon_{(n-1)}] + GI \cdot T \cdot \varepsilon_{(n-1)}$$

avec

$$\varepsilon_{(n)} = e_{(n)} - TRA_{(n)}$$

$$e_{(n)} = \text{consigne température-résistance.}$$

Dans cette variante, chaque fois que le microprocesseur a déterminé, comme précédemment, la valeur $e_n$ à appliquer, il calcule la valeur $W_{(n)}$ qui sera appliqué à la commande de la résistance chauffante. Cet algorithme est la réalisation numérique d'un régulateur P. I. (proportionnel, integral) dont le gain proportionnel est GP et le gain intégral GI; T représente la période d'échantillonnage.

Cette variante permet de tenir compte du décalage existant entre la montée en température des résistances chauffantes et la montée en température de l'enceinte du four, et d'éviter die soummettre les résistances chauffantes à des contraintes pouvant entraîner leur destruction.

Il va de soi que toutes variantes ou modifications apportées aux dispositifs et procédés décrits, à la portée de l'homme de l'art, font également partie de l'esprit de l'invention.

## Revendications

1. Procédé d'identification du modèle mathématique du foctionnement en boucle ouverte d'une enceinte thermique pour toute une gamme de températures de fonctionnement, ce procédé comprenant les étapes suivantes:

— la détermination approximative du temps de réponse de l'enceinte par mesure et enregistrement de la réponse en température de l'enceinte à un échelon de puissance,
— l'élaboration d'un signal d'identification constitué d'une multiplicité de créneaux quasi-aléatoires, de largeur variable, comprise entre une limite inférieure et une limite supérieure en réponse avec le temps de réponse de l'enceinte,
— la mesure, par échantillonnage, calcul et mise en mémoire des réponses impulsionnelles de l'enceinte, au signal d'identification pour chaque créneau,
— le calcul du modèle de représentation de l'enceinte à partir des réponses impulsionnelles mémorisées,

caractérisé en ce que la hauteur des créneaux du signal d'identification est également variable, et en ce que le calcul du modèle de représentation de l'enceinte est effectué par paramétrage, à partir des enregistrements suivants:

— l'enregistrement, dans une première série de mémoires, d'une première multiplicité de premières valeurs déterminées après échantillonnage à des intervalles de temps constants, lesdites valeurs étant représentatives de la réponse impulsionnelle de l'enceinte en fonction du temps, lesdites valeurs étant rangées à des adresses correspondant au rang de l'échantillonnage,

— l'enregistrement, dans une deuxième série de mémoires, d'une deuxième multiplicité de valeurs représentatives de la variation du gain des réponses impulsionnelles en fonction de la température de fonctionnement, lesdites deuxièmes valeurs étant rangées à des adresses correspondant aux différentes températures de fonctionnement,

— l'enregistrement, dans une troisième série de mémoires, d'une troisième multiplicité de valeurs représentatives de la variation de la période d'échantillonnage en fonction des différentes températures de fonctionnement, à des adresses correspondant aux températures.

2. Procédé selon la revendication 1, caractérisé en ce qu'il comprend une phase de validation et de contrôle du modèle consistant à appliquer des signaux d'action à l'enceinte, à calculer au moyen du modèle la réponse aux signaux de l'enceinte, et à comparer la réponse calculée avec la réponse mesurée.

3. Procédé selon l'une des revendication 1 et 2, caractérisé en ce que le calcul de la réponse impulsionnelle et du modèle est élaboré par une console qui utilise l'algorithme d'identification suivant:

$$h_i^M (n + 1) = h_i^M (n) - \frac{\lambda \varepsilon (n) \ (n - i)}{E_{(n)}^T \ E_{(n)}}$$

algorithme dans lequel

$$\varepsilon_{(n)} = SM_{(n)} - SO_{(n)} = \sum_{i=1}^{N} [h_i^M (n) - h_i^0 (n)] e_{n-i}$$

$h_i^{\circ} (n)$ étant le $i^{\text{ème}}$ coefficient de la réponse impulsionnelle de l'enceinte,
SM étant la sortie modèle,
SO étant la sortie objet,
$\lambda$ étant une valeur comprise entre 0 et 2,

$$E_n^T = [e_{n-1}, e_{n-2}, \ldots e_{n-N}] \text{ et}$$

$$E_n = \begin{bmatrix} e_{n-1} \\ e_{n-2} \\ e_{n-i} \\ e_{n-N} \end{bmatrix}$$

est le vecteur entrée constitué par les valeurs des entrées e aux instants des échantillonnage $n-1, n-2, \ldots n-N$,
$\varepsilon_{(n)}$ est égal à la différence entre la sortie du modèle à l'instant d'échantillonnage n et la sortie de l'enceinte dite sortie objet,
$h_i^M$ est la ième composante du vecteur HM à l'instant d'échantillonnage n.

4. Procédé de régulation d'une enceinte thermique comprenant la mesure de la température à réguler, l'élaboration, à partir des valeurs de température et du point de consigne, d'un signal d'action à imposer à l'enceinte, et une commande agissant sur la température de l'enceinte en réponse au signal d'action, l'élaboration du signal de commande étant effectuée à l'aide d'un premier ensemble d'algorithmes qui tient compte de la mesure de la sortie de l'enceinte, calcule le comportement futur souhaité en fonction du tempes de réponse souhaité du système bouclé, estime, grâce à un modèle mathématique l'évolution future de la sortie et ajuste les commandes futures, applique la première commande et compare la mesure avec les valeurs estimées pour appliquer la commande suivante en cas d'adaptation, ou effectue un nouveau calcul, une nouvelle estimation et un nouvel ajustement avant d'appliquer la nouvelle première commande, ledit modèle mathématique étant au préalable obtenu au moyen d'un processus d'identification comprenant les étapes suivantes:

— la détermination approximative du temps de réponse de l'enceinte par mesure et enregistrement de la réponse en température de l'enceinte à un échelon de puissance,

— l'élaboration d'un signal d'identification constitué d'une multiplicité de créneaux quasi-aléatoires, de largeur variable, comprise entre une limite inférieure et une limite supérieure en réponse avec le temps de réponse de l'enceinte,

— la mesure, par échantillonnage, calcul et mise en mémoire des réponses impulsionnelles de l'enceinte, au signal d'identification pour chaque créneau,

— le calcul du modèle de représentation de l'enceinte à partir des réponses impulsionnelles mémorisées,

caractérisé en ce que la hauteur des créneaux du signal d'identification est également variable, et en ce que le calcul du modèle de représentation de l'enceinte est effectué par paramétrage, à partir des enregistrements suivants:

— l'enregistrement, dans une première série de mémoires, d'une première multiplicité de premières valeurs déterminées après échantillonnage à des intervalles de temps constants, lesdites valeurs étant représentatives de la réponse impulsionnelle de l'enceinte en fonction du temps, lesdites valeurs étant rangées à des adresses correspondant au rang de l'échantillonnage,

— l'enregistrement, dans une deuxième série de mémoires, d'une deuxième multiplicité de valeurs représentatives de la variation du gain des réponses impulsionnelles en fonction de la température de fonctionnement, lesdites deuxièmes valeurs étant rangées à des adresses correspondant aux différentes températures de fonctionnement,

— l'enregistrement, dans une troisième série de mémoires, d'une troisième multiplicité de valeurs représentatives de la variation de la période d'échantillonnage en fonction des différentes températures de fonctionnement, à des adresses correspondant aux températures.

5. Procédé selon la revendication 4, appliqué à la régulation avec double boucle, caractérisé par la mesure de la température de l'élément de chauffage de l'enceinte et l'utilisation de cette température par un deuxième algorithme qui calcule les commandes à appliquer à l'élément de chauffage de l'enceinte, en fonction du paramètre mesuré de cet élément de chauffage et des commandes calculées par le premier ensemble d'algorithmes.

6. Procédé selon la revendication 4, caractérisé en ce que le premier ensemble d'algorithmes est constitué par

$$SMR\,(n+h) = \alpha\,SMR\,(n+h-1) + (1-\alpha)\,CONS$$

avec

$$\alpha = e^{\dfrac{-T}{\tau_r}}\;\;et$$

$$SMR\,(n+1) = \alpha\,SO + (1-a)\,CONS$$

$$\overset{\bullet}{e_j} = e_j - \frac{\lambda\,\varepsilon\,(n+h-i+1)\,h_j^M}{HM^T\,HM}$$

avec

$$\varepsilon_{(n+h-i+1)} = SMIF_{(n+h-i+1)} - SMR_{(n+h-i+1)} \quad SMIF_{(n+h)} = HM^T \cdot \overset{\bullet}{E_h}$$

équations dans lesquelles:

T est la période d'échantillonnage,
$\tau_2$ est le temps de réponse souhaité du système,
SMR est la sortie du modèle de référence,
SO est la sortie de l'objet mesuré,
CONS est la consigne,
$\overset{\bullet}{E_h}$ est le vecteur commande composé de h commandes futures et N−h commandes passées,
j étant un indice variant de 1 à h−i+1,
i étant un indice variant de 1 à h,
$\lambda$ étant le coefficient de relaxation,
ej étant la valeur de la $j^{ième}$ commande future obtenue soit à l'itération précédente, soit par décalage pour la $1^{ère}$ itération,
$\overset{\bullet}{e_j}$ étant une valeur prenant la place de ej à l'itération suivante,
$h_j^M$ étant un coefficient du modèle interne,
$\varepsilon\,(n+h-i+1)$ étant un écart prédit à l'instant n au h−i+1 point de coïncidence.

7. Procédé selon la revendication 6, caractérisé en ce que le deuxième algorithme est un algorithme P. I. numérique de la forme

$$W_{(n)} = W_{(n-1)} + GP\,[\varepsilon_{(n)} - \varepsilon_{(n-1)}] + GI \cdot T \cdot \varepsilon_{(n-1)}$$

avec

$$\varepsilon_{(n)} = e_{(n)} - TRA_{(n)}$$

équations dans lequelles:
GP est le gain de l'action proportionnelle,
GI est le gain de l'action intégrale,
T est la période d'échantillonnage,
W$_{(n)}$ est la valeur à appliquer à l'organe de commande de l'enceinte à l'instant d'échantillonnage n,
W$_{(n-1)}$ est la valeur à appliquer à l'organe de commande de l'enceinte à l'instant d'échantillonnage n−1,
(n) est la différence entre la sortie du modèle à l'instant d'échantillonnage n et la sortie objet de ladite enceinte,
(n−1) est la différence entre la sortie du modèle à l'instant d'échantillonnage n et la sortie objet de ladite enceinte.

## Patentansprüche

1. Identifizierungsverfahren des mathematischen Modells der Open-Loop-Funktion einer thermischen Hülle für eine Reihe von Betriebstemperaturen, wobei dieses Verfahren aus folgenden Etappen besteht:

— ungefähre Bestimmung der Ansprechzeit der Hülle durch Messung und Aufzeichnung der Temperaturantwort der Hülle auf eine bestimmte Stärkestufe,
— Ausarbeitung eines Identifizierungssignals, bestehend aus einer Vielzahl von fast regellosen Impulsen unterschiedlicher Breite, die, je nach Ansprechzeit der Hülle, zwischen einer unteren Grenze und einer oberen Grenze variiert,
— für jeden Impuls, Messung, durch Sampling, Berechnung und Speicherung der Impulsantworten der Hülle auf das Identizierungssignal,
— Berechnung, aufgrund der gespeicherten Impulsantworten, des die Hülle darstellenden Modells,

dadurch gekennzeichnet, daß die Höhe der Impulse des Identifizierungssignals gleichfalls unterschiedlich ist und daß die Berechnung des die Hülle darstellenden Modells durch Aufstellung von Parametern aufgrund folgender Aufzeichnungen erfolgt:

— Aufzeichnung, in einer ersten Speicherserie, einer Vielzahl von ersten Werten, bestimmt nach in konstanten Zeitabschnitten durchgeführtem Sampling, wobei diese Werte repräsentativ sind für die Impulsantwort der Hülle im Verhältnis zur Zeit und diese Werte in Adreßspeicher eingeordnet werden, die der Samplingreihenfolge entsprechen,
— Aufzeichnung, in einer zweiten Speicherserie, einer zweiten Vielzahl von Werten, die repräsentativ sind für die Verstärkung der Impulsantworten im Verhältnis zur Betriebstemperatur, wobei besagte zweite Werte in Adreßspeicher eingeordnet werden, welche den verschiedenen Betriebstemperaturen entsprechen,
— Aufzeichnung, in einer dritten Speicherserie, einer dritten Vielzahl von Werten, welche repräsentativ sind für die Schwankungen der Samplingperiode je nach den Betriebstemperaturen; Speicherung in den Temperaturen entsprechenden Adreßspeichern.

2. Verfahren nach Anspruch 1, dadurch gekennzeichnet, daß es eine Gültigmachungs- und Kontrollphase des Modells enthält, die darin besteht, die Hülle Aktionssignalen zu unterwerfen, mit Hilfe des Modells die Antwort der Hülle auf die Signale zu berechnen und die berechnete Antwort mit der gemessenen Antwort zu vergleichen.

3. Verfahren nach einem der Ansprüche 1 und 2, dadurch gekennzeichnet, daß die Berechnung der Impulsantwort und des Modells von einer Konsole ausgeführt wird, welche folgenden Identifizierungsalgorithmus benutzt:

$$h_i^M(n+1) = h_i^M(n) - \frac{\lambda \varepsilon(n)\ e(n-i)}{E_{(n)}^T\ E_{(n)}}$$

Algorithmus, in dem

$$\varepsilon_{(n)} = SM_{(n)} - SO_{(n)} = \sum_{i=1}^{N} [h_i^M(n) - h_i^0(n)]\ e_{n-i},$$

wobei

$h_i^0(n)$ der $i^{te}$ Koeffizient der Impulsantwort der Hülle ist,
SM der Modellausgang ist,
SO der Objektausgang ist,
$\lambda$ ein Wert zwischen 0 und 2 ist.

**0 074 868**

$$E_n^T = [e_{n-1}, e_{n-2}, \dots e_{n-N}]$$

$$E_n = \begin{bmatrix} e_{n-1} \\ e_{n-2} \\ e_{n-i} \\ e_{n-N} \end{bmatrix}$$

der Eingangsvektor ist, gebildet aus den Eingangswerten e zu den Samplingzeiten $n-1$, $n-2$, ... $n-N$,

$\varepsilon(n)$ gleich der Differenz zwischen dem Modellausgang zur Samplingzeit n und dem Hüllenausgang, Objektausgang genannt ist,

$h_i^M$ die $i^{te}$ Komponente des Vektors HM zur Samplingzeit n ist.

4. Verfahren zur Regelung einer thermischen Hülle bestehend aus der Messung der zu regelnden Temperatur, der Bildung, aufgrund der Temperaturwerte und des Referenzpunktes, eines auf die Hülle anzuwendenden Aktionssignals und einer Steuerung, die auf die Temperatur der Hülle als Antwort auf das Aktionssignal einwirkt. Die Bildung des Steuersignals geschieht mit Hilfe einer ersten Algorithmeneinheit, welche die Messung des Hüllenausgangs in Betracht zieht, das zukünftige gewünschte Verhalten im Verhältnis zur gewünschten Antwortzeit des Loopsystems berechnet, mit Hilfe eines mathematischen Modells die zukünftige Steuerung anpaßt, die erste Steuerung anwendet und die Messung mit den geschätzten Werten vergleicht, um, im Fall sie zutrafen, die folgende Steuerung vorzunehmen oder sonst eine neue Berechnung, Schätzung und Anpassung vorzunehmen, bevor die neue erste Steuerung vorgenommen wird, wobei man zuvor das mathematische Modell durch ein Identifizierungsverfahren mit folgenden Etappen erhält:

— die ungefähre Bestimmung der Antwortzeit der Hülle durch Messung und Aufzeichnung der Temperaturantwort auf eine bestimmte Stärkestufe,
— die Bildung eines Identifizierungssignals bestehend aus einer Vielzahl von nahezu regellosen Impulsen verschiedener Breite, die zwischen einer unteren und einer oberen Grenze je nach der Ansprechzeit der Hülle variieren,
— für jeden Impuls, Messung, durch Sampling, Berechnung und Speicherung der Impulsantworten der Hülle auf das Identifizierungssignal,
— aufgrund der gespeicherten Impulsantworten, Berechnung des die Hülle darstellenden Modells,

dadurch gekennzeichnet, daß die Höhe der Impulse des Identifizierungssignals gleichfalls variiert und daß die Berechnung des die Hülle darstellenden Modells durch Aufstellung von Parametern aufgrund folgender Aufzeichnungen erfolgt:

— Aufzeichnung, in einer ersten Speicherserie, einer ersten Vielzahl von ersten Werten bestimmt nach in konstanten Zeitabschnitten durchgeführten Sampling, wobei diese Werte repräsentativ sind für die Impulsantwort der Hülle im Verhältnis zur Zeit und diese Werte in Adreßspeicher, die der Samplingreihenfolge entsprechen, eingeordnet werden,
— Aufzeichnung, in einer zweiten Speicherserie, einer zweiten Vielzahl von Werten, welche repräsentativ sind für die Verstärkung der Impulsantworten im Verhältnis zur Betriebstemperatur; besagte zweite Werte werden in Adreßspeicher eingeordnet, die den verschiedenen Betriebstemperaturen entsprechen,
— Aufzeichnung in einer dritten Speicherserie einer dritten Vielzahl von Werten, welche repräsentativ sind für die Schwankungen der Samplingperiode infolge der unterschiedlichen Betriebstemperaturen, und Einordnung in Adreßspeicher, die den Temperaturen entsprechen.

5. Verfahren nach Anspruch 4, angewandt auf die Regelung mit Doppelloop, gekennzeichnet durch die Messung der Temperatur des Heizelementes der Hülle und Verwendung besagter Temperatur durch einen zweiten Algorithmus, welcher, aufgrund des gemessenen Parameters dieses Heizelementes und der von der ersten Algorithmuseinheit berechneten Steuerungen, die Steuerungen berechnet, die auf das Heizelement der Hülle angewandt werden sollen.

6. Verfahren nach Anspruch 4, dadurch gekennzeichnet, daß die erste Algorithmuseinheit gebildet wird von

$$\text{SMR}(n+h) = \alpha\,\text{SMR}(n+h-1) + (1-\alpha)\,\text{CONS}$$

mit

$$\alpha = e^{\frac{-T}{t_r}} \text{ und}$$

$$\text{SMR}(n+1) = a\,\text{SO} + (1-\alpha)\,\text{CONS}$$

11

$$e_j^{\cdot} = e_j - \frac{\lambda\varepsilon\,(n+h-i+1)}{HM^T\,HM}\,h_j^M$$

mit

$$\varepsilon_{(n+h-i+1)} = SMIF_{(n+h-i+1)} - SMR_{(n+h-i+1)}\quad SMIF_{(n+h)} = HM^T \cdot E_h^{\cdot}$$

Gleichungen, in denen:

T die Samplingperiode ist,

$\tau_2$ die gewünschte Ansprechzeit des Systems ist,

SMR der Ausgang des Referenzmodells ist,

SO der Ausgang des gemessenen Objektes ist,

CONS die Referenz ist,

$E_h^{\cdot}$ der Steuervektor ist, gebildet aus h zukünftigen Steuerungen und N — h vergangenen Steuerungen,

j eine zwischen 1 bis h — i + 1 variierende Richtzahl ist,

i eine zwischen 1 und h variierende Richtzahl ist,

$\lambda$ der Relaxationskoeffizient ist,

$e_j$ der Wert der $j^{ten}$ zukünftigen Steuerung ist, die entweder bei der vorhergehenden Iteration erhalten wurde oder aber durch Verschiebung bei der ersten Iteration,

$e_j^{\cdot}$ ein Wert ist, welcher bei der nächsten Iteration den Platz von $e_j$ einnimmt,

$h_j^M$ ein Koeffizient des internen Modell ist,

$\varepsilon_{(n+h-i+1)}$ eine vorhergesagte Differenz zur Zeit n am Deckungspunkt h — i + 1 ist.

7. Verfahren nach Anspruch 6, dadurch gekennzeichnet, daß der zweite Algorithmus ein digitaler PI Algorithmus ist, der Form

$$W_{(n)} = W_{(n-1)} + GP\,[\varepsilon_{(n)} - \varepsilon_{(n-1)}] + GI \cdot T \cdot \varepsilon_{(n-1)}$$

mit

$$\varepsilon_{(n)} = e_{(n)} - TRA_{(n)}$$

Gleichungen, in denen:

GP die Verstärkung der proportionalen Aktion ist,

GI die Verstärkung der integralen Aktion ist,

T die Samplingperiode ist,

$W_{(n)}$ der Wert ist, der dem Steuerorgan zum Samplingzeitpunkt n übermittelt wird,

$W_{(n-1)}$ der Wert ist, der dem Steuerorgan zum Samplingzeitpunkt n — 1 übermittelt wird,

(n) die Differenz ist zwischen dem Modellausgang zum Samplingzeitpunkt n und dem Objektausgang besagter Hülle,

(n — 1) die Differenz ist zwischen dem Modellausgang zum Samplingzeitpunkt n und dem Objektausgang besagter Hülle.

**Claims**

1. A process for identifying the mathematic model of the operating in an open loop of a thermal enclosure for a whole range of operating temperatures, comprising the following stages:

— approximative determination of the response time of the enclosure by measuring and recording the temperature response of the enclosure at a power level,

— elaboration of an identification signal formed of a multiplicity of square waves varying in an nearly random way, the width of which is also variable and situated between a lower limit and an upper limit with respect to the response time of the enclosure,

— measurement by sampling, calculation and storing, of the pulsed responses of the enclosure to the identification signal for each square wave,

— calculation of the model representing the enclosure from the stored pulsed responses,

characterized in that the height of the square waves of the identification signal ist also variable and in that the calculation of the model representing the enclosure is effected by parametering, based on the following recordings:

— recording in a first series of memories, of a first multiplicity of first values determined after sampling at constant time intervals, said values being representative of the pulsed response of the enclosure as a function of time, said values being stored at addresses corresponding to the rank of the sampling,

12

— recording, in a second series of memories, a second multiplicity of values representative of the variation in the gain of pulsed responses as a function of the operating temperature, said second values being stored at addresses corresponding to the different operating temperatures,

— recording, in a third series of memories, a third multiplicity of values representative of the variation of the sampling period as a function of the different operating temperatures, at addresses corresponding to the temperatures.

2. The process as claimed in claim 1, characterized in that it comprises a validation and control stage of the model consisting in applying action signals to the enclosure, calculating by means of the model the response to the signals of the enclosure and in comparing the calculated response with the measured response.

3. The process as claimed in one of claims 1 and 2, characterized in that calculation of the pulsed response and of the model is elaborated by means of a console which uses an identification algorithm such as

$$h_i^M (n+1) = h_i^M (n) - \frac{\lambda \varepsilon(n) \, (n-i)}{E_{(n)}^T \, E_{(n)}}$$

algorithm in which

$$\varepsilon_{(n)} = SM_{(n)} - SO_{(n)} = \sum_{i=1}^{N} [h_i^M (n) - h_i^0 (n)] \, e_{n-i}$$

$h_i^\circ (n)$ being the $i^{th}$ coefficient of the pulsed response of the enclosure,
SM being the model output,
SO being the objet output,
$\lambda$ being a value comprised between 0 and 2,

$$E_n^T = e_{n-1}, e_{n-2}, \dots e_{n-N},$$

$$E_n = \begin{bmatrix} e_{n-1} \\ e_{n-2} \\ e_{n-i} \\ e_{n-N} \end{bmatrix}$$

is the input vector formed by the values of the inputs e at sampling times $n-1, n-2, \dots n-N$,
$\varepsilon_{(n)}$ is equal to the difference between the model output at sampling time n and the enclosure output, called object output,
$h_i^M$ is the $i^{th}$ component of vector HM at sampling time n.

4. Regulation process of a thermal enclosure comprising measurement of the temperature to be regulated, the elaboration, from the values of temperature and the reference point, of an action signal to be imposed on the enclosure and a control acting on the temperature of the enclosure in response to the action signal, the elaboration of the control signal being effected by means of a first algorithm set which takes into account the measurement of the output of the enclosure, calculates the future desired behaviour as a function of the desired response time of the looped system, estimates, by means of a mathematical model, the future development of the output and adjusts the future controls, applies the first control and compares the measurement with the estimated values for applying the following control in the case of adaptation or effects a new calculation, a new estimation and a new adjustment before applying the new first control, said mathematical model having first been obtained by means of an identification procedure comprising the following stages:

— approximative determination of the response time of the enclosure by measuring and recording the temperature response of the enclosure at a power level,

— elaboration of an identification signal formed of a multiplicity of square waves varying in a nearly random way, with variable width and situated between a lower limit and an upper limit with respect to the response time of the enclosure,

— measurement by sampling, calculation and storing, of the pulsed responses of the enclosure to the identification signal for each square wave,

— calculation of the model representing the enclosure from the stored pulsed responses,

characterized in that the height of the square waves of the identification signal is also variable and in that the calculation of the model representing the enclosure is effected by parametering based on the following recordings:

13

— recording, in a first series of memories, of a first multiplicity of first values determined after sampling at constant time intervals, said values being representative of the pulsed response of the enclosure as a function of time, said values being stored at addresses corresponding to the rank of the sampling,

— by recording, in a second series of memories, a second multiplicity of values representative of the variation in the gain of pulsed responses as a function of the operating temperature, said second values being stored at addresses corresponding to the different operating temperatures,

— by recording, in a third series of memories, a third multiplicity of values representative of the variation of the sampling period as a function of the different operating temperatures, at addresses corresponding to the temperatures.

5. A process as claimed in claim 4, applied to regulation with double loop, characterized by the measurement of the temperature of the heating element of the enclosure and by the fact that use is made of this temperature by a second algorithm which calculates the controls to be applied to the heating element of the enclosure, as a function of the measured parameter of this heating element and the controls calculated by the first algorithm set.

6. A process as claimed in claim 4, characterized in that the first algorithm set is formed by

$$SMR\,(n+h) \;=\; \alpha\,SMR\,(n+h-1) + (1-\alpha)\,CONS$$

with

$$\alpha \;=\; e\,\frac{-T}{\tau_r} \quad \text{and}$$

$$SMR\,(n+1) \;=\; a\,SO \;+\; (1-\alpha)\,CONS$$

$$\overset{\cdot}{e_j} \;=\; e_j \;-\; \frac{\lambda\varepsilon\,(n+h-i+1)}{HM^T\,HM}\; h_j^M$$

with

$$\varepsilon_{(n+h-i+1)} \;=\; SMIF_{(n+h-i+1)} - SMR_{(n+h-i+1)} \quad SMIF_{(n+h)} = HM^T \cdot \overset{\cdot}{E_h}$$

equations in which:
T is the sampling period,
$\tau_2$ is the desired response time of the system,
SMR is the output of the reference model,
SO is the output of the measured object,
CONS is the reference,
$\overset{\cdot}{E_h}$ is the control vector formed of h future controls and $N-h$ past controls,
j being an index varying from 1 to $h-i+1$,
i being an index varying from 1 to h,
$\lambda$ being the relaxation coefficient,
ej being the value of the $j^{th}$ future control, obtained either by the preceding iteration or by shifting for the first iteration,
$\overset{\cdot}{e_j}$ being a value taking the place of ej at the following iteration,
$h_j^M$ being a coefficient of the internal model,
$\varepsilon\,(n+h-i+1)$ being a predicted difference at time n, $h-i+1$ point of coincidence.

7. A process as claimed in claim 6, characterized in that the second algorithm is the PI digital algorithm of the form

$$W_{(n)} \;=\; W_{(n-1)} + GP\,[\varepsilon_{(n)} - \varepsilon_{(n-1)}] + GI \cdot T \cdot \varepsilon_{(n-1)}$$

with

$$\varepsilon_{(n)} \;=\; e_{(n)} - TRA_{(n)}$$

equations in which:
GP is the proportional action gain,
GI is the integral action gain,
T is the sampling period,
$W_{(n)}$ is the value to be applied to the control member of the enclosure at the sampling time n,
$W_{(n-1)}$ is the value to be applied to the control member of the enclosure at the sampling time $n-1$,
(n) being the difference between the output of the model at the sampling time n and the object output of said enclosure,
$(n-1)$ being the difference between the model output at the sampling time n and the object output of said enclosure.

14

## FIG. 1

$\theta_e$

$0_c$

E

P.I.D

3

4

2

8  7  6  11

1

## FIG. 2

60

59  V

83

58  55  51

$h_i^o(n)$

$\mu P$  $C_{A_N}$

$C_{N_A}$  e

3  4

82  56  52  62  11  C

81  53  57

84  54

1  2

91

ECRAN

10

CLAVIER

FIG.3

FIG.4

FIG.5

TEMPS

0 074 868

2/3

0 074 868

FIG. 6

R.I

$h_i^M$

T

TEMPS

FIG. 7

53

51

$C^A_N$

81

58

cons.

e

P. I

$C^A_N$ 52

W

11

$\triangleright$

3

4

12

C

2

1

TRA

$C^A_N$ 122

123

121